Europäisches Patentamt

European Patent Office

Office européen des brevets

(11) Publication number: **0 138 578**
**B1**

## (12) EUROPEAN PATENT SPECIFICATION

(45) Date of publication of patent specification: **26.04.89**

(21) Application number: **84306938.6**

(22) Date of filing: **11.10.84**

(51) Int. Cl.⁴: **B 01 D 53/26,** F 04 B 39/16

(54) Condensers for compressed gas systems.

(30) Priority: **14.10.83 GB 8327635**

(43) Date of publication of application:
**24.04.85 Bulletin 85/17**

(45) Publication of the grant of the patent:
**26.04.89 Bulletin 89/17**

(84) Designated Contracting States:
**BE DE FR GB IT NL SE**

(56) References cited:
**DE-A-2 951 304**
**FR-A-2 325 419**
**GB-A-2 055 615**
**US-A-3 001 546**
**US-A-4 129 144**

(73) Proprietor: **BENDIX LIMITED**
**Douglas Road**
**Kingswood, Bristol BS15 2NL (GB)**

(72) Inventor: **Thomas, Richard**
**55 Bevington Close**
**Patchway Bristol BS15 5NP (GB)**
Inventor: **Waldron, William Thomas**
**53 Recotry Close**
**Yate Bristol BS17 5SD (GB)**
Inventor: **Neal, Brian Patrick**
**1 Woodcote Mount Hill**
**Kingswood Bristol (GB)**

(74) Representative: **Turner, Alan Reginald**
**c/o Bendix Limited Douglas Road**
**Kingswood, Bristol BS15 2NL (GB)**

Courier Press, Leamington Spa, England.

## Description

This invention relates to condensers for compressed gas systems and relates more especially to condensers for condensing moisture from air on its way from an air compressor to a reservoir.

In compressed air systems it is usual to connect a condenser between a reciprocating piston compressor and a reservoir to be charged. The condenser may be a device as described in previously published U.K. Patent Specification No. 2,055,615A. Such a condenser serves to cool the air which is warmed by the compression process and thereby condenses moisture therein before the air passes to a reservoir. A condenser also has the advantage of removing oil carried over from the compressor and thereby preventing it reaching the compressed air system which is supplied from the reservoir. Moisture and oil are removed from the condenser itself either by a manually operable drain cock as in the case of the condenser described in the above publication or by an automatic drain valve. Although an automatic drain valve is to be preferred it has the disadvantage of being relatively low capacity and may become clogged with emulsified oily water and carbon. This is particularly disadvantageous in applications such as compressed air braking systems where it is most important that such contaminants do not reach complex system valves to cause sticking or corrosion thereof.

According to the invention, there is provided a condenser for apparatus including a compressor and a reservoir the condenser including a housing of a thermally conducting material with an input port at an upper end and a baffle for directing the flow of incoming gas over the interior surface of the wall of the housing to an interior region which communicates with an output port, and with a drain valve situated at the lower end of the housing for receiving condensed moisture characterised by the output port of the condenser having a check valve and by the drain valve being part of a fluid pressure operable or electrically operable dump valve for dumping the pressure in said housing.

In order that the invention may be more clearly understood and readily carried into effect, the same will be further described by way of example with reference to the accompanying drawings of which,

Fig. 1 illustrates one example of a condenser according to the invention and,

Fig. 2 illustrates part of a compressed air system using the condenser of Fig. 1.

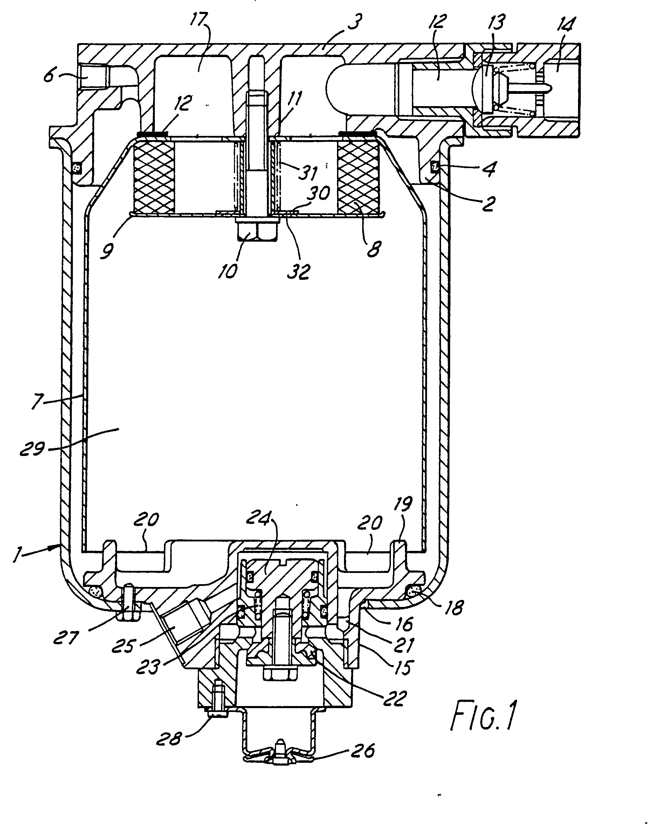

Referring to Fig. 1 of the drawings, a cylindrical thermally conducting housing 1 has an upper open end which seals onto a downwardly projecting spigot 2 of an upper casting 3, the spigot 2 being provided with an 'O' ring 4 and the cylinder being retained in position on the upper casting by means of bolts which are not shown. The upper casting has a compressed air input port 6 communicating with the outer surface of an inverted cup-shaped baffle 7 which serves to direct compressed air from a compressor around the interior surface of the cylinder. The baffle 7 is retained, together with a cylindrical filter element 8, disc valve member 30 and a spring 31 by means of a disc 9 and a retaining bolt 10 screwed into an internally threaded spigot 11. A suitable rubber gasket 12 is positioned between the baffle and the housing to normally prevent communication between the outside of the baffle and the interior of the region between the filter and an outlet port 14 other than round the lower edge of the baffle and via the filter 8. Disc valve member 30 is spring loaded by the spring 31 to normally close off a filter-bypass path, via apertures 32 in disc 9, from the interior region 29 to the output region 17 but in the event of the filter becoming clogged the disc-valve may resiliently deflect to partially bypass the filter. The region 17 is connected to output port 14 via a one-way check valve 13 which prevents any return flow of air from an air pressure reservoir when connected at 14.

The lower end of the cylindrical housing 1 is provided with a closure casting 15 which, bolted into an aperture 16, is sealed against the interior of the end of the cylinder by an 'O' ring 18. The casting has an upwardly extending rim 19 provided with openings such as 20 for permitting condensed moisture and deposited oil to flow to the interior of the casting from where it can pass out via a drain passage 21. Screwed into the outward end of the casting 15 there is provided a dump valve assembly which consists of a normally closed valve member 22 spring-loaded by a spring 23 and openable by the application of sufficient air pressure to the upper surface of a control piston 24. The casting is provided with a control pressure input port 25 which communicates with the upper surface of piston 24 and can be provided with a control signal from a compressor unloader or a system governor. The output side of the valve 22 communicates with a simple rubber disc vent 26 of known form attached to the casting by screws such as 28. The casting is retained in contact with the end of the cylinder by three retaining bolts such as 27.

In operation of the condenser, compressed air is supplied by the compressor to the port 6 and by virtue of the baffle 7, is caused to flow downwardly around the cooling interior surface of the cylindrical wall of the cylinder and emerges at the lower end into the inner region 29. Condensed water and oil droplets can flow under gravity down the interior wall of the cylinder and run through openings 20 into the central part of the lower casting defined by the upstanding rim 19. Air in the inner chamber 29 thence flows radially inwardly through the cylindrical filter element 8, into the chamber 17 from whence it can flow out via check valve 13 to charge a reservoir connected at output port 14.

The compressor will normally be provided with a governor either for controlling an unloader mechanism on the compressor itself or to provide operation of an unloader valve whereby the compressor continues to operate off-load and thereby ceases temporarily to supply further air to the reservoir once the reservoir pressure has attained a level set for the system. In use of the present condenser the unloader signal is connected to the port 25 whereby the piston 24 of the dump valve 22 is moved downwards to unseat the dump valve 22 and thereby permit substantial dumping of air pressure from the chamber 29 to drive out any condensed moisture, oily water or carbon mixture which has been deposited in the central part of the lower casting. By virtue of the check valve 13, no discharge of the reservoir takes place as a result of this dumping action.

By the provision of a dump valve such as 22 in the lower end of the cylinder of the condenser, an efficient clearing action is provided and problems such as may be encountered with a normal automatic drain valve are avoided. Furthermore, by designing the dump valve 22 to have a suitable capacity it can also operate in the system as an unloader valve for the compressor so that the need for a separate or integral unloader valve in the compressor can be avoided.

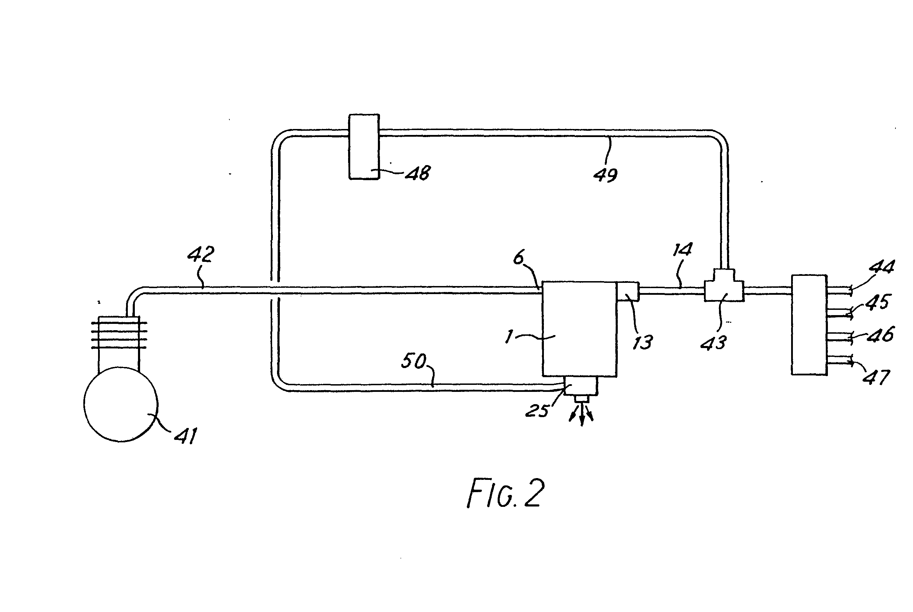

Such a system is shown in Fig. 2, having an air compressor 41, which for a vehicle compressed air system is driven by the engine of the vehicle. The output of the compressor is connected via a pipe 42 to the input port 6 of the condenser with output check valve 13, the output 14 being connected by a branch connector 43 to a multi-circuit protection valve for charging a plurality of reservoirs or circuits connected at pipes 44, 45, 46 and 47. A governor valve 48 of known form is connected between the branch connector 43 and the control input 25 of the dump valve of the condenser.

In an alternative embodiment, the valve 22 may be an electrically operable valve, such as a magnet valve signalled electrically via a pressure operable switch provided in a governor such as 48 of Fig. 2.

## Claims

1. A condenser for apparatus including a compressor and a reservoir the condenser including a housing (1) of a thermally conducting material with an input port (6) at an upper end and a baffle (7) for directing the flow of incoming gas over the interior surface of the wall of the housing (1) to an interior region (29) which communicates with an output port (14), and with a drain valve (22) situated at the lower end of the housing for receiving condensed moisture characterised by the output port (14) of the condenser having a check valve (13) and by the drain valve (22) being part of a fluid pressure operable or electrically operable dump valve for dumping the pressure in said housing.

2. A condenser as claimed in claim 1 characterised by the dump valve being housed in a closure member (15) which is sealingly located against an interior surface of the housing (1) to close an aperture (16).

3. A condenser as claimed in claim 2 characterised by an 'o' ring (18) being located between the member (15) and said interior surface around said aperture (16).

4. A condenser as claimed in claim 2 or 3 characterised by retaining members (27) holding said member (15) in position against the interior surface.

5. A compressed gas system characterised by a condenser as claimed in claim 1, 2, 3 or 4 connected in a charging path (42, 14) between a compressor (4) and a reservoir and including a governor (48) connected to sense the charged pressure of the reservoir to operate the dump valve.

6. A compressed gas system as claimed in claim 5 characterised by the dump valve being of sufficient capacity to act as an unloader valve for the compressor.

## Patentansprüche

1. Kondensator für eine Vorrichtung, die einen Verdichter und einen Behälter umfaßt, wobei der Kondensator ein Gehäuse (1) aus einem wärmeleitenden Material umfaßt mit einer Eintrittsöffnung (6) an einem oberen Ende und einer Leiteinrichtung (7), um den Strom des eintretenden Gases über die Innenfläche der Wand des Gehäuses (1) zu einem inneren Bereich (29) zu richten, der mit einer Austrittsöffnung (14) in Verbindung steht, und mit einem Abzugsventil (22), welches am unteren Ende des Gehäuses angeordnet ist für das Aufnehmen von kondensierter Feuchtigkeit, dadurch gekennzeichnet, daß die Austrittsöffnung (14) des Kondensators ein Rückschlagventil (13) hat, und daß das Abzugsventil (22) Teil eines durch Fluiddruck betätigbaren · oder elektrisch betätigbaren Ablaßventils zum Ablassen des Drucks in dem Gehäuse ist.

2. Kondensator nach Anspruch 1, dadurch gekennzeichnet, daß das Ablaßventil in einem Verschließteil (15) aufgenommen ist, der abdichtend gegen eine Innenfläche des Gehäuses (1) angeordnet ist, um eine Öffnung (16) zu schließen.

3. Kondensator nach Anspruch 2, dadurch gekennzeichnet, daß ein O-Ring (18) zwischen dem Teil (15) und der Innenfläche rund um die Öffnung (16) angeordnet ist.

4. Kondensator nach Anspruch 2 oder 3, gekennzeichnet durch Halteteile (27), die den Teil (15) in seiner Position gegen die Innenfläche halten.

5. Druckgassystem, gekennzeichnet durch einen Kondensator nach Anspruch 1, 2, 3 oder 4, der in einem Aufladeweg (42, 14) zwischen einem Verdichter (4) und einem Behälter angeordnet ist und einen Regler (48) umfaßt, der angeschlossen ist, um den Ladedruck des Behälters festzustellen, um das Ablaßventil zu betätigen.

6. Druckgassystem nach Anspruch 5, dadurch gekennzeichnet, daß das Ablaßventil eine Kapazität hat, die ausreichend ist, damit es als ein Entlastungsventil für den Verdichter wirken kann.

## Revendications

1. Un condenseur pour appareil incluant un compresseur et un réservoir, le condenseur comprenant un boîtier (1) en un matériau conducteur de la chaleur et muni d'un orifice d'entrée (6) à son extrémité supérieure et un déflecteur (7) pour diriger l'écoulement de gaz entrant sur la surface intérieure de la paroi du boîtier (1), en direction d'une région (29) intérieure qui communique avec un orifice de sortie (14) et avec une soupape de purge (22) placée à l'extrémité inférieure du boîtier pour recevoir une humidité condensée, caractérisé en ce que l'orifice de sortie (14) du condenseur est muni d'une soupape de retenue (13) et en ce que la soupape de purge (22) fait partie d'une soupape de déversement commandée par pression de fluide ou électriquement pour décharger la pression dans le boîtier.

2. Un condenseur conforme à la revendication 1, caractérisée en ce que la soupape de déversement est logée dans un organe de fermeture (15) placé en liaison étanche contre la surface intérieure du boîtier (1) pour fermer une ouverture (16).

3. Un condenseur conforme à la revendication 2, caractérisé en ce qu'un joint torique (18) est placé entre l'organo (15) et ladite surface intérieure, autour de ladite ouverture (16).

4. Un condenseur conforme à la revendication 2 ou 3, caractérisé en ce que des organes de fixation (27) retiennent ledit organe (15) en position contre la surface intérieure.

5. Un système de gaz comprimé caractérisée par un condenseur tel que revendiqué dans la revendication 1, 2, 3 ou 4, connecté dans une ligne de charge entre un compresseur (4) et un réservoir et comprenant un régulateur (48) connecté pour détecter la pression de charge du réservoir pour actionner la soupape de déversement.

6. Un système de gaz comprimé conforme à la revendication 5, caractérisé en ce que la soupape de déversement est d'une capacité suffisante pour agir en soupape de décharge du compresseur.

EP 0 138 578 B1

FIG.1

FIG.2